(19) Europäisches Patentamt / European Patent Office / Office européen des brevets

(11) **EP 2 772 469 A1**

(12) **EUROPÄISCHE PATENTANMELDUNG**

(43) Veröffentlichungstag:
03.09.2014 Patentblatt 2014/36

(51) Int Cl.:
*C02F 1/461* *(2006.01)* *C02F 1/467* *(2006.01)*

(21) Anmeldenummer: 13156886.7

(22) Anmeldetag: **27.02.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder:
• **Bayer Technology Services GmbH**
**51368 Leverkusen (DE)**

• **Bayer CropScience AG**
**40789 Monheim am Rhein (DE)**

(72) Erfinder: **Die Erfindernennung liegt noch nicht vor**

(74) Vertreter: **BIP Patents**
**c/o Bayer Intellectual Property GmbH**
**Creative Campus Monheim**
**Alfred-Nobel-Straße 10**
**40789 Monheim (DE)**

(54) **Mikro-Lamellenelektrodenzelle sowie deren Verwendung**

(57) Die Erfindung betrifft eine Elektrolysezelle zur besonders effizienten Behandlung von mit organischen Substanzen belasteten Abwässern durch elektro-oxidativen Abbau der zum chemischen Sauerstoffbedarf bei- tragenden Abwasserbestandteile sowie deren Anwen- dung.

EP 2 772 469 A1

**Beschreibung**

Die Erfindung betrifft eine Elektrolysezelle zur besonders effizienten Behandlung von mit organischen Substanzen belasteten Abwässern durch elektro-oxidativen Abbau der zum chemischen Sauerstoffbedarf beitragenden Abwasserbestandteile.

Eine Methode zur Behandlung mit organischen Substanzen belasteter Abwässer besteht darin, das Abwasser in einer Elektrolysezelle, welche mit Anoden mit einem hohen Überpotenzial zur Bildung von Sauerstoff bestückt sind, einem elektrischen Strom auszusetzen. Ab einer gewissen Potenzialdifferenz zwischen den Elektroden findet an der Anode eine schrittweise Oxidation der gelösten organischen Bestandteile des Elektrolyten (Abwasser) statt, wobei diese je nach Wahl des Anodenmaterials und ggf. weiterer Prozessbedingungen direkt oder über intermediäre reaktive Spezies ablaufen kann. Als hierfür geeignete Elektrodenmaterialien ist z.B. Platin auf Tantal, Niob und/oder Titan, diverse Metalloxide wie z.B. $PbO_2$, $IrO_2$ oder $SnO_2$ bzw. Mischoxide von Ta/Ir, Ta/Pt, Ta/Pd oder Ta/Rh (z.B. DE 44 26 901 A1) oder aber Kohlenstoff basierte Materialien wie Glaskohlenstoff oder elektrisch leitfähiger Diamant, jeweils auf metallischen Trägern oder Grafit, bekannt.

Als besonders gut für den elektro-oxidativen Abbau organischer Verunreinigungen geeignetes Anodenmaterial hat sich durch Dotierung mit Bor leitfähig gemachter Diamant (BDD) erwiesen (z.B. EP 0 659 691 B1 oder DE 197 08 296 A1), der z.B. durch plasmaunterstützte CVD-Verfahren in mikrokristallinen Schichten auf geeignete Substrate (z.B. Nb, Ta, Mo, Ti, Si oder Glaskohlenstoff) aufgebracht wird. Diese Diamantschichten zeichnen sich gegenüber anderen bis dato bekannten Anodenmaterialien durch eine besonders hohe Überspannung für die Erzeugung elementaren Sauerstoffs, eine hohe chemische Beständigkeit (auch gegen Auslaugung), eine deutlich verringerte Neigung zur Ausbildung von störenden Ablagerungen auf der Elektrodenoberfläche sowie eine sehr hohe Polarisierbarkeit der Grenzfläche zum Elektrolyten aus (vgl. M. Panizza und G. Cerisola, "Application of diamond electrodes to electrochemical processes" in Electrochimica Acta 51 (2005) 191-199).

Aufgrund der sehr hohen Sauerstoff-Überspannung ist es möglich, an BDD-Anoden eine hinreichend hohe Spannung anzulegen, um an ihrer Oberfläche im Elektrolyten Hydroxylradikale (OH·) zu bilden, welche als sehr starkes Oxidationsmittel wirken und damit in der Lage sind, eine große Bandbreite an im Elektrolyten gelösten organischen Verbindung aufzubrechen und schrittweise zu oxidieren. Bei hinreichend langer Einwirkungszeit des Prozesses lassen sich auf diese Weise die meisten wenigstens in Spuren wasserlöslichen organischen Verbindungen quasi vollständig mineralisieren und damit unschädlich machen. Solange keine Sättigungseffekte auftreten, erfolgt die Bildung der Hydroxylradikale dabei praktisch stöchiometrisch, d.h. mit jedem von der Anode aufgenommenen Elektron wird aus einem Wassermolekül des Elektrolyten ein Hydroxylradikal gebildet, welches im Folgenden als intermediäre reaktive Spezies die Oxidation eines im Elektrolyten gelösten oxidierbaren Moleküls bewirken kann.

Die Methode weist von daher im Prinzip eine hohe Stromeffizienz auf - unter geeigneten Bedingungen liegt diese tatsächlich bei praktisch 100%. Diese wird allerdings beschränkt durch die sehr kurze Lebensdauer der Hydroxylradikale: Zerfallen diese, bevor sie mit einer oxidierbaren Spezies im Elektrolyten in Wechselwirkung getreten sind, ist ihr Oxidationspotenzial unwiderruflich verloren und die Stromeffizienz nimmt ab. Mit der kurzen Lebensdauer einher geht eine extrem geringe örtliche Reichweite der Hydroxylradikale, wodurch diese praktisch vollständig an der Anodenoberfläche lokalisiert sind. Eine vollständige Umsetzung der elektrolytisch gebildeten Hydroxylradikale im Sinne einer Weiterreaktion mit oxidierbaren Spezies aus dem Elektrolyten erfolgt folglich nur dann, wenn letztere in hinreichender Konzentration an der Anodenoberfläche vorhanden sind. Da während der elektrolytischen Abwasserbehandlung beständig oxidierbare Spezies in der unmittelbaren Umgebung der Elektrodenoberfläche abgebaut werden, stellt sich hier nach kurzer Zeit eine im Verlauf des Prozesses bei begrenztem Gesamtelektrolytvolumen stetig abnehmende Gleichgewichtskonzentration ein, die durch die stromabhängige Geschwindigkeit des Abbaus oxidierbarer Spezies einerseits und deren Zufluss aufgrund konvektiven und diffusiven Stofftransports andererseits bestimmt ist und in jedem Falle unter der mittleren Konzentration im Volumen des Elektrolyten liegt. Sobald der Zustrom an oxidierbaren Spezies zur Anode geringer wird als die strombedingte Neubildung von Hydroxylradikalen, zerfällt ein Teil von diesen ungenutzt und die Stromeffizienz des Prozesses sowie die zunächst konstante Abbaurate fallen ab. Da der Stofftransport aus dem Volumen des Elektrolyten zur Anodenoberfläche in letzter Instanz stets diffusiver Natur ist, tritt dieser Zustand bei gegebener Zellgeometrie und gegebenen Strömungsbedingungen stets bei Unterschreiten einer bestimmten, zur Stromdichte proportionalen Konzentration an oxidierbaren Spezies im Volumen des Elektrolyten auf.

Soll daher eine gegebene Menge an Abwasser in einer begrenzten Zeit bis zu einer vorgegebenen Restkonzentration an oxidierbaren Verunreinigungen behandelt werden, ist es bei gegebenen Stofftransporteigenschaften der Zelle erforderlich, neben einer geeigneten Wahl des Arbeitsstroms eine gewisse minimale Anodenfläche bereitzustellen. Da insbesondere bordotierte Diamantelektroden ausgesprochen hohe flächenbezogene Investitionskosten mit sich bringen, ist es aus Gründen der Wirtschaftlichkeit geboten, diese erforderliche Anodenfläche durch Optimierung des Stofftransports in der Zelle so klein wie möglich zu halten und dadurch den Betrieb mit hohen Stromdichten bei dennoch hoher Stromeffizienz zu ermöglichen.

Um die Verhältnisse quantitativ darzustellen ist es sinnvoll, als Maß für die Konzentration an oxidierbaren Spezies, also für den Verunreinigungsgrad eines Abwassers mit oxidierbaren Substanzen den Chemischen Sauerstoffbedarf (CSB) einzuführen, welcher die theoretische Menge an Sauerstoff angibt, die benötigt würde, um die im Abwasser enthaltenen oxidierbaren Verunreinigungen unter bestimmten (genormten) Bedingungen vollständig zu oxidieren. Die folgenden quantitativen Betrachtungen basieren im Wesentlichen auf: M.A. Rodrigo et al., Modeling of Electrochemical Process for the Treatment of Wastewater Containing Organic Pollutants, in: C. Comniniellis and G. Chen (eds.), Electrochemistry for the Environment, Springer LLC (2010).

Im Zuge der elektrochemischen Behandlung nimmt die Konzentration an oxidierbaren Substanzen im Abwassers und damit sein CSB sukzessive ab. Oberhalb eines von der Zelle und deren Durchströmungsverhältnissen sowie vom Diffusionsverhalten der oxidierbaren Spezies abhängigen Grenzwertes $CSB_{lim}$ ist die Konzentration an oxidierbaren Spezies an der Anode stets größer als die der gebildeten Hydroxylradikale und der Abbau erfolgt stöchiometrisch mit der eingebrachten Ladung, bei konstantem Strom I also linear mit der Zeit:

$$\frac{\mathrm{d}CSB(t)}{\mathrm{d}t} = -\frac{I \cdot V_R}{4F}$$

$F = 9{,}45 \cdot 10^4$ Cmol$^{-1}$ ist hierbei die Faraday-Konstante und $V_R$ kennzeichnet das Volumen des in Behandlung befindlichen Abwasserreservoirs, welches i.d.R. mittels einer Pumpe aus dem Vorlagebehälter wiederholt im Kreislauf durch die Elektrolysezelle gefahren wird. Unterhalb von $CSB_{lim}$ wird der Zustrom der oxidierbaren Spezies aus dem Volumen des Elektrolyten zur Anode bestimmend für die Abbaurate, welcher seinerseits proportional zur Konzentration dieser Spezies im Elektrolytvolumen ist, somit:

$$\frac{\mathrm{d}CSB(t)}{\mathrm{d}t} = -\frac{I \cdot V_R}{4F} \cdot \frac{CSB(t)}{CSB_{lim}}$$

$CSB_{lim}$ selbst ist bestimmt durch die Stromdichte $j = I/A$ (A = Anodenfläche) und den Stofftransportkoeffizienten $k_m$:

$$CSB_{lim} = \frac{I}{4F \cdot k_m \cdot A}$$

Hiermit wird der zeitliche Verlauf des CSB unterhalb von $CSB_{lim}$ schließlich unabhängig vom Arbeitsstrom und der zuvor lineare Abbau geht in einen exponentiellen, also zunehmend langsamer werdenden über:

$$CSB(t) = CSB_0 \cdot \exp\left(-\frac{k_m A}{V_R} \cdot t\right)$$

Die Stromeffizienz, also das Verhältnis der Zahlen eingesetzter zu für die Oxidation oxidierbarer Spezies genutzter Ladungsträger sinkt in diesem Betriebszustand stetig mit abnehmendem Rest-CSB:

$$ICE(t) = \frac{CSB(t)}{CSB_{lim}}$$

und die Dauer des Prozesses, ausgehend von einem Startwert $CSB_0$ bis zu einem Zielwert $CSB_{end}$ ist gegeben durch:

$$t_{end} = \left[\frac{CSB_0}{a \cdot I} + \frac{1}{k_m \cdot A} \cdot \ln\left(\frac{CSB_{lim}}{CSB_{end}}\right)\right]$$

Um einen solchen Reinigungsprozess in einer möglichst kurzen Zeit mit möglichst hoher Strom-und damit Energieeffizienz bis zu einer möglichst niedrigen Restkonzentration an oxidierbaren Verunreinigungen betreiben zu können, ist es folglich erforderlich, das Produkt $k_m A$ aus Stofftransportkoeffizient und Anodenfläche hinreichend groß zu wählen. Da insbesondere BDD-Anoden - einerseits aufgrund des hohen Preises für die bevorzugt als Substrat verwendeten Refraktärmetalle (Nb, Ta, Mo), andererseits durch die aufwändige Herstellung der Diamantbeschichtung - sehr teuer sind, ist es schon aus wirtschaftlichen Gründen wünschenswert, den Stofftransport in der Zelle so weit wie möglich zu optimieren.

Bis zu einem gewissen Grad ist eine Erhöhung von $k_m$ durch die Erhöhung des Elektrolytvolumenstroms durch eine gegebene Zelle möglich. So finden sich in verschiedenen Dokumenten zum Stand der Technik Hinweise auf definierte Durchfluss- oder Fluidgeschwindigkeitsbereiche in den Zellen (z.B. DE 37 05 956 C2, DE 43 30 518 A1 oder DE 44 26 901 A1). Diesem Vorgehen sind allerdings wirtschaftliche Grenzen gesetzt, da mit zunehmendem Volumenstrom der Druckverlust im Kreislaufsystem und somit auch der Leistungsbedarf der Umwälzpumpe rapide ansteigt. Neben erhöhten Energiekosten fallen damit ab einem gewissen Punkt auch gesteigerte Investitionskosten für eine größer dimensionierte Verrohung und Pumpentechnik an.

Eine andere Möglichkeit die Stromeffizienz der elektro-oxidativen Abwasserbehandlung bei niedrigen CSB-Werten zu verbessern besteht darin, dem Elektrolyten bestimmte Stoffe zuzusetzen, die an der Anode zu starken intermediären Oxidationsmitteln mit im Vergleich zu den Hydroxylradikalen deutlich verlängerter Lebensdauer umgesetzt werden. Ist diese groß genug, können die entsprechenden Spezies ihrerseits von der Anode aus in das Volumen des Elektrolyten hinein transportiert werden und dort für zusätzliche Oxidationsprozesse sorgen (Mediator-Effekt). Hierfür hat sich in besonderer Weise $NaSO_4$ bewährt, welches üblicherweise in Konzentrationen von wenigen 1 g/L bis zu einigen 10 g/L dem Elektrolyten zugegeben und im Prozess zu stark oxidativ wirkendem Peroxodisulfat umgesetzt wird (z.B. DE 10 2005 006 214 A1). Ferner kommen andere Sulfate (z.B. DE 44 26 901 A1) sowie diverse weitere als starke Oxidationsmittel wirkende Salze (z.B. Perchlorate, Hypochlorite - vgl. DE 37 05 956 C2) als Mediatoren infrage, welche entweder in ihrer oxidierten oder reduzierten Form dem Elektrolyten zugegeben und im Prozess zyklisch im Volumen des Elektrolyten reduziert und an der Anode wieder oxidiert werden. Die Wirkung solcher Mediatoren im Sinne einer Erhöhung der Stromeffizienz bei niedrigen CSB-Werten ist allerdings recht begrenzt und lässt sich auch nicht beliebig durch Erhöhung der Mediatorkonzentration steigern. Zudem ist die Zugabe von zusätzlichen Substanzen zum zu behandelnden Abwasser, insbesondere von Salzen, die meist nur mit hohem Aufwand wieder abgetrennt werden können, in vielen Anwendungen nur in sehr beschränktem Maße erlaubt und grundsätzlich eher unerwünscht.

Ein besonders zielführender Ansatz zur Erhöhung der Stromeffizienz der elektro-oxidativen Abwasserbehandlung bei niedrigen CSB-Werten liegt daher in der Optimierung der Zellgeometrie bzw. damit verbundenen Strömungsführung des Elektrolyten in der Zelle, um den Stofftransport insbesondere an der Anode durch möglichst starke konvektive Anteile zu intensivieren. Die US 7 232 507 B2 beschreibt hierzu beispielsweise eine Anordnung planarer, im Wechsel gestapelter Anoden und Kathoden mit dazwischen liegenden netzartigen Isolatorfolien, welche in einem fluiddichten Gehäuse eingebracht sind und parallel zu den Elektrodenoberflächen durchströmt werden. Die Netz- oder gewebeartige Ausbildung der Isolatoren sowie ggf. einer der Elektroden sorgt hier für eine wiederholte Umlenkung des Elektrolyten und damit für einen über die gesamte Elektrodenfläche recht intensiven Stoffaustausch. Als nachteilig muss man allerdings bei dieser Anordnung die recht aufwändige interne Kontaktierung der Elektroden betrachten. Insbesondere alle fluidberührenden Bestandteile der Anodenkontaktierung sind bei der elektro-oxidativen Abwasserbehandlung einer sehr hohen Korrosionsbelastung ausgesetzt und müssen daher aus denselben teuren und größtenteils schwer zu bearbeitenden Materialien (z.B. Niob) gefertigt werden, wie sie auch für die Anodensubstrate eingesetzt werden.

Weiterhin sind Anordnungen mit Elektroden bekannt, welche entweder mit rippen-, noppen- oder kanalartigen Strukturen ausgestattet sind und im Wesentlichen entlang ihrer Oberfläche um- bzw. durchströmt werden. Beispiele hierfür sind u.a. in der DE 35 19 573 A1, der DE 25 38 000 A1, der DE 100 25 167 A1, der JP 326 6 617 B2 oder der WO 2008 056 336 A1 gegeben. Auch hier sorgen wiederholte Strömungsumlenkungen für eine Intensivierung des Stofftransports, führen jedoch aufgrund der vergleichsweise langen Fluidwege durch die Zelle zu mitunter recht hohen Druckverlusten. Zudem ist die Herstellung reliefartiger Strukturen wie z.B. Gräben oder Rippen aus den für BDD-Elektroden vorzugsweise eingesetzten Materialien ziemlich aufwändig.

Um der Forderung nach geringen Druckverlusten nachzukommen, werden ferner Anordnungen vorgeschlagen, bei denen mit Durchbrüchen versehene Elektroden gestapelt und im Wesentlichen in Stapelrichtung, also vornehmlich senkrecht zur Elektrodenoberfläche durchströmt werden. Hierbei sind Ausführungen mit geometrisch unbestimmten Durchbrüchen beschrieben, die entweder allgemein als permeabel oder durchlässig dargestellt sind (z.B. WO 2012 004 769 A1 oder KR 10 2012 002 189 A1) oder z.B. als Drahtgeflecht beschrieben werden (DE 603 06 172 T2). Ferner finden sich Ausführungen mit geometrisch zumindest qualitativ genauer definierten Durchbrüchen wie Löchern oder Schlitzen, welche entweder zwischen den einzelnen Stapelebenen fluchtend angeordnet sind (JP 2011 246 799) oder deren relative Position zwischen den Ebenen des Stapels nicht explizit angegeben und daher als nicht genauer definiert anzunehmen ist (z.B. KR 101 080 227 B1). Als Referenzelle für den Leistungsvergleich mit der erfindungsgemäßen Mikro-Lamellenelektrodenzelle wurde beispielsweise eine kommerziell erhältliche Laborzelle eingesetzt, welche im Kern aus einem im Wesentlichen entlang der Stapelrichtung durchströmten Stapel von Elektroden bestand, welche jeweils aus einem ringförmigen Rahmen und einem darin eingeschweißten Streckmetallblech zusammengesetzt waren.

Während sich eine ganze Reihe meist feinporiger Substratformen wie z.B. Drahtgeflechte, Sinterfritten oder Metallschäume nicht oder nur mit großen Schwierigkeiten stabil mit BDD beschichten lassen, weisen Elektrodenanordnungen mit definierten, jedoch in Hauptströmungsrichtung fluchtenden Durchbrüchen von vornherein ungünstige Stofftransporteigenschaften auf. Dem gegenüber kann bei Anordnungen mit nicht definierter gegenseitiger Positionierung der Elektrodendurchbrüche innerhalb des Elektrodenstapels zwar mit einem gewissen, meist zufälligen, für den Stofftransport förderlichem Versatz der Durchbrüche in benachbarten Ebenen innerhalb des Elektrodenstapels gerechnet werden, das Potenzial derartiger Geometrien zur Intensivierung des Stofftransports wird jedoch bei weitem nur unzureichend ausgeschöpft, sofern nicht Form, Größe und gegenseitige Positionierung der Durchbrüche sowohl innerhalb der Elektroden als auch hinsichtlich der benachbarten Elektroden sinnvoll definiert werden.

Die der Erfindung zugrunde liegende Aufgabe bestand daher darin, eine Durchflusszelle für die elektro-oxidative Abwasserreinigung mittels mit leitfähigem Diamant beschichteten Elektroden zu entwickeln, welche aufgrund ihrer Geometrie einen gegenüber konventionellen Zellen deutlich verbesserten Stoffübergang aus dem Elektrolyten zu den Elektroden (insbes. zur Anode) aufweist. Die Zelle sollte zudem einen einfach und kostengünstig zu realisierenden Aufbau, einen niedrigen Druckverlust und eine hohe Stabilität, insbesondere gegenüber im Betrieb auftretender Korrosion vorweisen.

Die Aufgabe wird überraschenderweise gelöst durch eine Elektrolysezelle, umfassend wenigstens einen Einlass und wenigstens einen Auslass für den Elektrolyten, ferner umfassend eine Anzahl von planaren, mit durchströmbaren Öffnungen versehenen Elektroden, von denen wenigstens eine durch funktionelle Beschichtung als Anode mit einem im Vergleich zur Standard-Wasserstoffelektrode erhöhten Überpotenzial für die Bildung von Sauerstoff und wenigstens eine weitere als Gegenelektrode (Kathode) ausgebildet ist, welche hinsichtlich ihrer Polarität in alternierender oder paarweise alternierender Reihenfolge angeordnet einen Stapel bilden, ferner umfassend eine Anzahl von Rahmenelementen, welche jeweils einzeln zwischen benachbarten Elektroden angeordnet sind, wobei die Rahmenelemente gleichzeitig für eine gegenseitige elektrische Isolierung, eine gegenseitige fluidische Abdichtung sowie für einen definierten gegenseitigen Abstand der jeweils angrenzenden Elektroden sorgen und der so gebildete Elektrodenstapel derart zwischen dem Einlass und dem Auslass eingebaut ist, dass ein zur Umgebung hin fluiddichter, durchströmbarer Elektrolytpfad vom Einlass durch den Elektrodenstapel zum Auslass entsteht, dadurch gekennzeichnet, dass

- benachbarte Elektroden einen gegenseitigen lichten Abstand von nicht mehr als 0,5 mm haben,
- die durchströmbaren Öffnungen in den Elektroden als parallel zueinander verlaufende, die Elektroden im Wesentlichen senkrecht zu ihrer Oberfläche durchbrechende Schlitze oder Schlitzreihen ausgebildet sind, wobei die einzelnen Schlitze eine Breite von nicht mehr als 1 mm und eine Länge von mindestens der dreifachen Breite vorweisen und in einem zu ihrer maximalen Ausdehnung senkrechten lichten Abstand von wenigstens der zweifachen Schlitzbreite zueinander stehen und
- die Schlitze bzw. Schlitzreihen in benachbarten Elektroden jeweils parallel zueinander verlaufen und senkrecht zu der maximalen Ausdehnung der Schlitze bzw. Schlitzreihen zueinander definiert versetzt angeordnet sind in einer Weise, dass der Abstand einer Schlitzreihe in einer Elektrode zu jeder unmittelbar benachbarten Schlitzreihe in den unmittelbar benachbarten Elektroden um nicht mehr als 25% variiert.

Gegenstand der Erfindung ist daher eine ebensolche Elektrolysezelle, welche im Folgenden auch als Mikro-Lamellenelektrodenzelle bezeichnet wird.

Der wesentliche Vorteil der erfindungsgemäßen Elektrolysezelle gegenüber dem Stand der Technik besteht darin, dass die definierte Geometrie und gegenseitige Ausrichtung der Durchbrüche in den Elektroden zu hohen Stofftransportkoeffizienten bei relativ geringen Druckverlusten führt.

Durch die konkrete Kombination weiterer, z.T. im Einzelnen bekannter Kennzeichen ergeben sich als weitere Vorzüge der erfindungsgemäßen Elektrolysezelle gegenüber dem überwiegenden Teil des Stands der Technik, dass

- die planaren, mit durchströmbaren Öffnungen versehenen Elektroden bzw. Elektrodensubstrate einfach und kostengünstig durch zweidimensional trennende Verfahren wie z.B. Laser- oder Wasserstrahlschneiden aus kommerziell gut verfügbaren Halbzeugen wie Folien oder Blechen gefertigt und mit verfügbaren Verfahren mit stabilen und homogenen Oberflächenbeschichtungen (z.B. BDD) versehen werden können,

- eine Kontaktierung der Elektroden z.B. durch an deren Rand ausgebildete oder angebrachte Kontaktlaschen außerhalb des Fluid führenden und damit dem Korrosionsangriff durch den Elektrolyten ausgesetzten Bereichs stattfinden kann,

- die hohe Funktionsintegration (Abstandshalter, elektrische Isolierung, fluidische Abdichtung) der aus einer oder wenigen Einzelkomponenten bestehenden Rahmenelemente einen sehr einfachen und damit auch kostengünstig realisierbaren Zellaufbau ermöglicht und insbesondere

Die als Anoden ausgebildeten Elektroden sind regelmäßig mit einer gezielt aufgebrachten Oberflächenschicht versehen, welche bei Einsatz mit vornehmlich wässrigen Elektrolyten eine besonders hohe Überspannung für die Erzeugung von Sauerstoff aufweisen und idealerweise die elektrolytische Erzeugung von Hydroxylradikalen begünstigen. Bewährt haben sich in diesem Zusammenhang Beschichtungen mit bestimmten Metalloxiden wie $PbO_2$, $IrO_2$ oder $SnO_2$ bzw. Mischoxide von Ta/Ir, Ta/Pt, Ta/Pd oder Ta/Rh sowie Kohlenstoff basierte Materialien wie Glaskohlenstoff, elektrisch leitfähiger diamantartiger Kohlenstoff (DLC) oder elektrisch leitfähiger Diamant. Bevorzugt werden allerdings Beschichtungen mit elektrisch leitfähigem Diamant, insbesondere solche mit bordotiertem Diamant (BDD) eingesetzt, wobei die Schichtdicke bevorzugt Werte von 1 $\mu$m bis 5 $\mu$m annimmt. Für die Aufbringung der Beschichtung sind grundsätzlich alle dem Fachmann bekannten und hierfür geeigneten Verfahren möglich, im Falle elektrisch leitender Diamantschichten sind dies beispielsweise plasmaunterstützte CVD (chemical vapour deposition) Verfahren.

Sofern die Zelle mehr als eine Anode und mehr als eine Kathode enthält, sind diese innerhalb des Elektrodenstapels in der Zelle entweder alternierend ("AKAK") oder paarweise alternierend ("AAKKAAKK", "AKKAKK" oder "AAKAAK"), bevorzugt jedoch alternierend angeordnet. Während die als Kathoden ausgebildeten Elektroden in der Zelle im Prinzip aus jedwedem elektrisch leitfähigen Material gefertigt sein können, welches den mechanischen, chemischen und thermischen Belastungen im Betrieb gewachsen ist - bevorzugt kommen hier z.B. Edelstähle, Kupfer, Aluminium sowie deren Legierungen oder aber Graphit, ggf. auch Nickelbasislegierungen zum Einsatz - ist für die als Anoden ausgebildeten Elektroden ein Basiswerkstoff zu wählen, der über diese Anforderungen hinaus insbesondere ein geeignetes Substrat für die funktionelle (elektrokatalytisch aktive) Beschichtung der Elektrode darstellt und den besonders hohen elektrochemischen Korrosionsbelastungen im Betrieb auch dann noch gewachsen ist, wenn die Beschichtung Beschädigungen oder punktuelle Leckagen aufweist, die einen direkten Kontakt des Elektrodensubstrats mit dem Elektrolyten zur Folge haben. Die Eignung als Substrat für die Oberflächenbeschichtung schließt dabei u.a. die Kompatibilität des Materials mit den Bedingungen des Beschichtungsprozesses, eine möglichst gute Übereinstimmung des Wärmeausdehnungskoeffizienten mit dem der Beschichtung, eine gute Haftung der Beschichtung, geringe bzw. kontrollierbare Interdiffusion zwischen Basis- und Schichtwerkstoff und ggf. solche spezifische Oberflächeneigenschaften ein, welche das Abscheide- bzw. Wachstumsverhalten der Beschichtung positiv beeinflussen können. Insbesondere im Falle einer Beschichtung mit leitfähigem Diamant bevorzugte Basiswerkstoffe für die Anoden sind daher die Metalle Niob, Wolfram, Tantal, Molybdän, Titan oder Legierungen hieraus sowie dotiertes Silizium, welche unter den elektrooxidativen Bedingungen im Betrieb ein stabile und diffusionsdichte Oxidschicht (Passivschicht) ausbilden. Besonders bevorzugte Basiswerkstoffe für die Anoden sind Niob, Tantal oder Titan, besonders bevorzugt Niob.

Insbesondere aus wirtschaftlichen Gründen vorteilhaft erweist sich die Fertigung der Elektroden (bzw. im Falle der Anoden der Substrate) aus flachen Halbzeugen wie Folien oder Blechen, wobei diese Dicken im Bereich von 0,2 mm bis 3 mm, bevorzugt zwischen 0,5 und 1,5 mm aufweisen. Dabei ist aufgrund des meist hohen Materialpreises grundsätzlich die Wahl einer möglichst geringen Materialdicke anzustreben. Dabei muss jedoch eine hinreichende Beigesteifigkeit gewährleistet bleiben, um einerseits ein Abplatzen der funktionellen (elektrokatalytisch aktiven) Beschichtung bei bzw. unmittelbar nach deren Herstellung - z.B. aufgrund thermischer Spannungen beim Abkühlen - zu unterbinden und andererseits im Betrieb, d.h. unter Druckbelastung durch den fließenden Elektrolyten, einen ausreichend präzise definierten Abstand der Elektroden über deren gesamte Fläche zu gewährleisten.

Die laterale Formgebung der Elektroden bzw. Elektrodensubstrate erfolgt vorzugsweise durch zweidimensional konturdefinierende Trennverfahren wie z.B. Wasserstrahlschneiden, Laserschneiden oder Formätzen, besonders bevorzugt durch Wasserstrahlschneiden. Je nach Aufbau der Konstruktion, insbesondere der Rahmenelemente, kann zusätzlich eine Einbringung von Dichtnuten erforderlich sein, die bevorzugt durch Fräsen oder Senkerodieren, besonders bevorzugt durch Fräsen, (ggf. auch HSC-Fräsen) erfolgt.

Die Anzahl und Größe der Elektroden, insbesondere der Anoden, und damit deren insgesamt im Prozess wirksame Fläche $A$ definiert im Zusammenspiel mit dem in der Zelle realisierten Stofftransportkoeffizienten $k_m$, dem eingebrachten elektrischen Strom $I = j \cdot A$ und dem zu behandelnden Gesamtvolumen $V$ an Elektrolyt (Abwasser) die (i.d.R. aufgrund von Sättigungseffekten zeitabhängige) Abbaurate des chemischen Sauerstoffbedarfs. Sie ist folglich so zu dimensionieren, dass bei vorgegebenem Startwert ein gewünschter Endwert des CSB innerhalb einer üblicherweise vorgegebenen Zeitspanne erreicht werden kann.

Um bei somit gegebener Gesamtanodenfläche besonders gute Stofftransporteigenschaften bei dennoch nicht zu großem Druckverlust in der Zelle zu erreichen, ist es im nächsten Schritt vorteilhaft, die Anzahl (und damit Größe) der Elektroden, deren gegenseitigen Abstand sowie die Breite und den gegenseitigen Abstand der Schlitze bzw. Schlitzreihen aufeinander und auf den Elektrolytmengenstrom durch die Zelle geeignet abzustimmen. Hierbei kann davon ausgegangen werden, dass eine Erhöhung der Anzahl fluidisch in Reihe geschalteter Elektroden, eine Verringerung des lichten Abstands zwischen den Elektroden, eine Erhöhung deren Dicke, eine Verringerung der Schlitzbreite in den Elektroden, eine Vergrößerung des gegenseitigen Abstands der Schlitze bzw. Schlitzreihen innerhalb der Elektroden sowie eine Erhöhung des Elektrolytmengenstroms durch die Zelle jeweils zu einer Erhöhung sowohl des Stofftransportkoeffizienten also auch zu einer Vergrößerung des Druckverlusts führen. Die Erhöhung des Druckverlustes erfolgt hierbei stets in einer höheren Potenz des jeweiligen der hier genannten Parameter als der Anstieg des Stofftransportkoeffizienten und ist daher bei der Auslegung geeignet abzuwägen. Als bevorzugt haben sich Schlitzbreiten zwischen 0,1 und 1,5 mm, Schlitzabstände zwischen 2 mm und 10 mm und lichte Elektrodenabstände zwischen 0,1 mm und 0,5 mm erwiesen. Als besonders bevorzugt können Schlitzbreiten zwischen 0,2 und 0,8 mm, Schlitzabstände zwischen 3 mm und 8 mm und lichte Elektrodenabstände zwischen 0,2 mm und 0,4 mm betrachtet werden, wobei die Schlitzbreite bevorzugt nicht größer als die halbe Elektrodendicke sein sollte. Als vorteilhaft können ferner Ausführungen der erfindungsgemäßen Zelle betrachtet werden bei denen der Abstand der Schlitze bzw. Schlitzreihen innerhalb jeder Elektrode sowie in allen Elektroden innerhalb der Zelle um nicht mehr als ±10% variiert, besonders bevorzugt konstant ist. Ebenso als bevorzugt zu betrachten sind Ausführungen der erfindungsgemäßen Zelle, bei denen der gegenseitige Abstand benachbarter Schlitze bzw. Schlitzreihen in benachbarten Elektroden um nicht mehr als ± 10% variiert, besonders bevorzugt konstant ist. Aus fertigungstechnischen Gründen kann es dabei vorteilhaft sein, die Anordnung der Schlitze bzw. Schlitzreihen durch geeigneten Versatz zu einer Symmetrielinie der Elektrodenaußenkontur so zu gestalten, dass die Geometrie der Anoden durch Achsenspiegelung bzw. Rotation um 180° aus der Geometrie der Kathoden hervorgeht bzw. umgekehrt.

Die zwischen den Elektroden angeordneten Rahmenelemente können jeweils aus einer einzelnen oder aus mehreren Komponenten bestehen, wobei die Funktionen als Abstandhalter, elektrisches Isolationselement und fluidisches Dichtelement ggf. auf diese Komponenten verteilt sein können. Im einfachsten Fall bestehen die Rahmenelemente aus einem einheitlichen, elektrisch isolierenden Werkstoff mit definiert elastischem (ggf. auch teilweise plastischem) Verformungsverhalten und weisen eine gleichförmige Dicke auf. Möglich ist auch ein schichtartiger Aufbau der Rahmenelemente mit einer zu beiden Dichtoberflächen hin elastischen, elektrisch isolierenden Schicht und einem festeren Kernmaterial (z.B. in Form einer Folie oder eines Gewebes), welches dem Rahmenelement eine zusätzliche mechanische Festigkeit verleiht. Durch definierte Verpressung eines solchen Rahmenelements zwischen den Elektroden wird gleichzeitig ein definierter lichter Abstand, eine fluidische Abdichtung sowie eine elektrische Isolationswirkung zwischen den jeweils an das Rahmelement angrenzenden Elektroden erreicht. Bevorzugt werden in diesem Fall elastomere Materialien, insbesondere solche mit hoher chemischer Beständigkeit verwendet, bei denen bereits mit geringen Flächenpressungen eine zuverlässige Dichtwirkung erreicht wird. Durch großzügige Dimensionierung der Dichtungsbreite - Werte zwischen 5 mm und 15 mm haben sich hier bewährt - kann die Variation der Dichtungshöhe über einen breiten Bereich von Verspannkräften so gering gehalten werden, dass selbst bei sehr grober Definition dieser Verspannkräfte (z.B. über die Anzugsmomente der für die Verspannung verwendeten Schrauben) eine hinreichend genaue Definition der Elektrodenabstände möglich ist. Derartige einteilige Rahmenelemente können vorteilhaft z.B. durch Wasserstrahlschneiden oder Stanzen aus handelsüblichen Elastomerfolien gefertigt werden und eignen sich für sehr einfache, kostengünstige und kompakte Aufbauten einer erfindungsgemäßen Mikro-Lamellenelektrodenzelle, wenn die Druck-, Temperatur- und chemischen Beständigkeitsanforderungen an diese nicht zu hoch sind. Sofern Halbzeuge aus geeignetem Material mit der gewünschten Dicke verfügbar sind, kann diese Ausführungsform des Rahmenelements als bevorzugt betrachtet werden.

In einer weiteren möglichen Ausführungsform der Rahmenelemente bestehen diese aus einem Distanzrahmen definierter Dicke, welcher jeweils aus elektrisch isolierendem Material gefertigt oder mindestens zu den Elektroden hin mit einer elektrischen Isolierung überzogen ist, sowie aus einem elastischen Dichtelement, welches zusammen mit dem Distanzrahmen in den durch diesen definierten Spalt zwischen den Elektroden eingesetzt ist. Bevorzugt liegt das Dichtelement jeweils schlüssig innerhalb des Distanzrahmens, so dass dieser als Stützelement wirkt, also das Dichtelement gegenüber dem Druck des in der Zelle befindlichen Elektrolyten abstützt. Auf diese Weise können Rahmenelemente realisiert werden, die auch eine Abdichtung zwischen den Elektroden gegenüber höheren Elektrolytdrücken ermöglicht. Aus Gründen einer verbesserten Handhabung kann es dabei auch vorteilhaft sein, dass das Dichtelement stoffschlüssig (z.B. durch Auf-/Einvulkanisieren) mit dem Distanzelement verbunden ist.

Bei einer dritten Variante der Rahmenelemente bestehen diese aus einem Distanzrahmen definierter Dicke , welcher jeweils aus elektrisch isolierendem Material gefertigt oder mindestens zu den Elektroden hin mit einer elektrischen Isolierung überzogen ist, sowie aus einem oder zwei elastischen Dichtelementen, welche in Nuten in den angrenzenden Elektroden eingebracht sind. Durch die Verlegung der Dichtfunktion in den Raum der Elektroden ermöglicht diese Ausführungsform die Verwendung auch sehr dünner Distanzrahmen, welche bevorzugt aus dünnen Kunststofffolien, besonders bevorzugt aus Fluorkunststofffolien (z.B. PTFE, PFA oder FEP) hergestellt werden können. Hiermit können folglich besonders kleine Interelektrodenabstände realisiert werden. Die Fertigung der Distanzrahmen kann dabei mit geringem Aufwand z.B. durch Laser- oder Wasserstrahlschneiden, in größeren Stückzahlen auch besonders wirtschaftlich durch Stanzen erfolgen. Als Dichtelemente kommen bevorzugt O-Ringe infrage, welche in einer breiten Vielfalt an Maßen und Werkstoffen (z.B. NBR, EPDM, FKM oder FFKM) verfügbar sind. Je nach Steifigkeit des Distanzrahmens werden zwei unmittelbar einander gegenüber liegende oder zwei parallel versetzt geführte Dichtelemente eingesetzt. Bei sehr dünnen Distanzrahmen mit geringer Biegesteifigkeit kann es auch ausreichend sein, nur ein Dichtelement pro Distanzrahmen einzusetzen.

Für die elektrische Kontaktierung der Elektroden erweist es sich als vorteilhaft, diese mit Kontaktlaschen auszustatten derart, dass die Kontaktlaschen im montierten Zustand aus dem Elektrodenstapel herausragen, und somit außerhalb des Elektrolyt führenden Zellenvolumens mit dem jeweiligen Pol der Stromversorgung verbunden werden können. Im einfachsten und bevorzugten Fall sind die Kontaktlaschen integraler Bestandteil der Geometrie der Elektroden bzw. Elektrodensubstrate und gehen somit aus deren Fertigung direkt mit hervor. Besonders bevorzugt besitzen die Kontaktlaschen eine Bohrung und sind so gestapelt, dass die Bohrungen der Laschen, welche zur jeweils gleichen Elektrodenpolarität (Anode/Kathode) gehören, fluchtend zueinander angeordnet sind, zwischen benachbarten Kontaktlaschen Kontaktscheiben eingebracht sind, deren Dicke dem lichten Abstand zwischen benachbarten Elektroden gleicher Polarität entspricht und die Elektroden jeweils gleicher Polarität auf diese Weise gänzlich oder in Gruppen z.B. durch Verschraubung elektrisch zusammengeschaltet und mit einer gemeinsamen Zuleitung zur Stromversorgung ausgestattet werden können.

Die erfindungsgemäße Elektrolysezelle kommt bevorzugt für den elektro-oxidativen Abbau insbesondere organischer Verunreinigungen in Abwässern zum Einsatz, welche lokal in kleineren bis mittleren Mengen bzw. Strömen mit mäßiger CSB-Belastung anfallen, jedoch aufgrund ihrer gewässerschädigenden Wirkung nicht unmittelbar in ein öffentliches Abwassernetz oder eine biologische Kläranlage eingeleitet werden können. Als Beispiele für solche Verunreinigungen können Wirkstoffe aus Pflanzenschutzmitteln oder Medikamenten, Rückstände aus der Produktion oder Handhabung von Chemikalien sowie Treibstoff- und /oder Reinigungsmittelrückstände genannt werden. Eine Anwendung der erfindungsgemäßen Elektrolysezelle erscheint dann bevorzugt sinnvoll bei einem Abwasseraufkommen von einigen 10 L/h bis zu einigen 1000 L/h bei CSB-Gehalten von einigen 0,1 g/L bis zu einigen 10 g/L.

Als Betriebsparameter für den Einsatz in diesen Anwendungsbereichen haben sich Stromdichten im Bereich von 1 kA/m$^2$ bis 5 kA/m$^2$, bevorzugt im Bereich von 2 kA/m$^2$ bis 3 kA/m$^2$ sowie Zirkulationsströme durch die Zelle bewährt, die zu Leerrohrgeschwindigkeiten innerhalb der Schlitzdurchbrüche in den Elektroden im Bereich von 0,3 m/s bis 3 m/s führen, wobei eine Erhöhung der Strömungsgeschwindigkeit regelmäßig zu einer Erhöhung der Stromausbeute der Zelle im transportlimitierten Betriebsbereich führt. Durch Zugabe von löslichen Sulfaten (z.B. NaSO$_4$) in einem Konzentrationsbereich von etwa 2 g/L bis etwa 50 g/L, bevorzugt 5 g/L bis etwa 20 g/L kann die Stromausbeute der Zelle im transportlimitierten Betriebsbereich noch weiter gesteigert werden.

Aufgrund der optimierten Stofftransporteigenschaften der erfindungsgemäßen Elektrolysezelle kann diese nicht nur für die elektro-oxidative Behandlung von Abwässern eingesetzt werden, sondern findet auch in weiteren Bereichen eine vorteilhafte Anwendung, in denen das hohe Oxidationspotenzial an den Anoden lokalisierter Spezies (z.B. Hydroxylradikale) für die chemische Umsetzung von Bestandteilen des Elektrolyten eingesetzt werden soll. Beispiele für eine solche vorteilhafte Anwendung der Mikro-Lamellenelektrodenzelle finden sich bei der elektrolytischen Synthese von Chemikalien, wie z.B. starken Oxidationsmitteln wie Ozon, Wasserstoffperoxid, Peroxodisulfaten, Peroxocarbonaten, Permanganaten etc., insbesondere wenn eine möglichst vollständige Umsetzung der Ausgangssubstanzen (reduzierte Formen) mit hoher Stromausbeute gefordert ist, sowie bei der elektrochemischen Sterilisierung von Wasser.

Nachfolgende Beispiele sollen die Leistungsfähigkeit der erfindungsgemäßen Elektrolysezelle anhand besonderer Ausführungsformen der Zelle und der Instrumentierung veranschaulichen, ohne diese jedoch zu beschränken:

Beispiel 1: Elektrochemische Oxidation mit einer Zelle konventioneller Geometrie

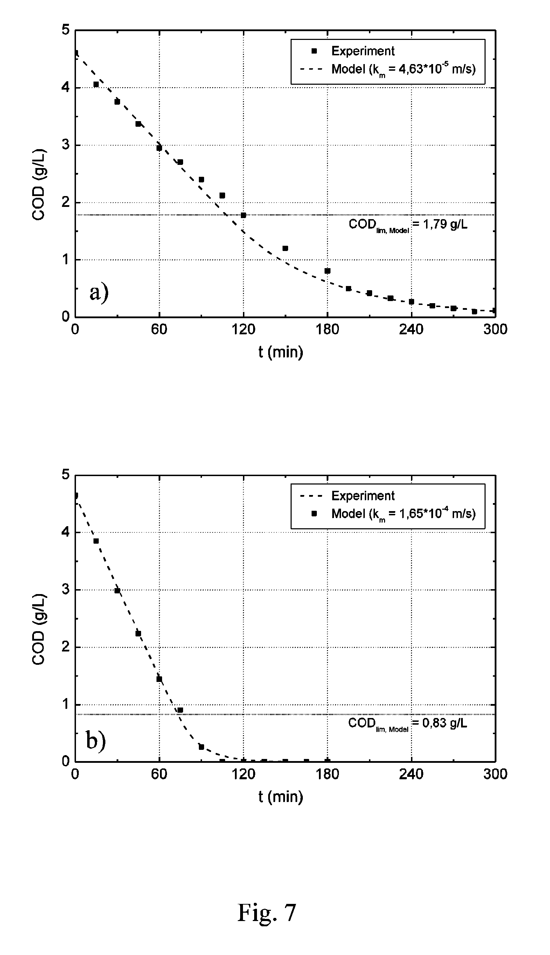

Ein künstliches Abwasser mit 2 g/L Phenol und 1 g/L Natriumchlorid in VE-Wasser wurde angesetzt. 3 L der Lösung wurden in die Versuchsapparatur bestehend aus Vorlage- und Rücklaufgefäß mit pH-Messung und Gasabsaugung, Kreiselpumpe, Durchflussmesser und Elektrolysezelle gefüllt und mit 120 g Natriumsulfat versetzt. Anschließend wurde die Lösung bei Raumtemperatur 5,5 Stunden lang bei 100 mA/cm$^2$ (entspr. 16 A) und einem Umwälzvolumenstrom von 950 L/h mit einer kommerziell verfügbaren Labor-Elektrolysezelle mit Streckmetallelektroden elektrochemisch behandelt. Die in kreisförmige Rahmenbleche eingeschweißten Streckmetallgitter hatten hierbei eine Maschenweite von ca. 7,5 mm, eine Stegbreite von ca. 2,4 mm, eine Dicke von ca. 2,0 mm und waren zwischen den Ebenen zwar in etwa parallel zueinander ausgerichtet, standen jedoch in keinerlei definierter Positionierung zueinander. Anoden und Kathoden waren im direkten Wechsel zueinander angeordnet ("AKAK"). Der lichte Abstand zwischen benachbarten Elektroden betrug dabei ca. 1,5 mm, ihre aktive Fläche 40 cm$^2$. Die Leitfähigkeit der Lösung lag zu Anfang des Versuchs bei 45 mS/cm, wobei sich eine Spannung von 6,2 V an der Elektrode einstellte. Dabei wurde der Stromeintrag während des Versuchs mehrfach manuell nachgestellt, um einen konstanten Wert einzuhalten. Während der Versuchslaufzeit wurden Proben entnommen und hinsichtlich CSB und Phenol analysiert. Der zeitliche Verlauf der gemessenen CSB-Werte ist in Figur 7a) zusammen mit einer angepassten Modellkurve dargestellt.

Beispiel 2: Elektrochemische Oxidation mit erfindungsgemäßer Mikro-Lamellenelektrodenzelle

Ein künstliches Abwasser wurde nach derselben Vorschrift wie in Beispiel 1 angesetzt. Dieselbe Menge Abwasser wurde mit derselben Menge Natriumsulfat wie in Beispiel 1 versetzt und 3 Stunden lang bei einer Stromdichte von 167 mA/cm$^2$ (entspr. 32 A) mit einer erfindungsgemäßen Mikro-Lamellenelektrodenzelle bei demselben Volumenstrom wie in Beispiel 1 elektrochemisch behandelt. Die Zelle war mit 2 mm dicken Elektroden bestückt, welche mit 0,7 mm breiten Schlitzen in regelmäßiger paralleler Anordnung mit jeweils 6,7 mm lichtem Abstand zueinander versehen waren. Die Schlitze waren so positioniert, dass sie innerhalb des Elektrodenstapels jeweils genau mittig zwischen den Schlitzen der Nachbarelektroden lagen. Zahl und Abfolge der Elektroden war identisch zu denen in der Vergleichszelle aus Beispiel 1 gewählt. Die aktive Fläche der Elektroden betrug jeweils 48,5 cm$^2$, ihr lichter Abstand 0,3 mm. Zu Beginn des Versuchs wurde eine Leitfähigkeit von 46 mS/cm gemessen und es stellte sich eine Spannung von 5,8 V ein. Während der Versuchslaufzeit wurden Proben entnommen und hinsichtlich CSB und Phenol analysiert. Der zeitliche Verlauf der gemessenen CSB-Werte ist in Figur 7b) zusammen mit einer angepassten Modellkurve dargestellt. Im Vergleich zu Figur 7a) ist deutlich zu erkennen, dass der CSB-Wert, bei dem der strombegrenzte lineare in den transportbegrenzten exponentiellen CSB-Abbau übergeht, trotz der höher angesetzten Stromdichte wesentlich reduziert ist. Die Modellierung der Kurven liefert für die Mikro-Lamellenelektrodenzelle einen um Faktor 3 bis 4 höheren Stofftransportkoeffizienten im Vergleich zur konventionellen Zelle, womit sich deutlich kürzere Behandlungszeiten bei insgesamt höherer Stromeffizienz und damit (auch in Verbindung mit einem niedrigeren Spannungsabfall über die Zelle) verringertem Gesamtenergieeintrag ergeben.

Die Erfindung wird anhand der folgenden Figuren beispielhaft erläutert ohne sie jedoch darauf zu beschränken. Es zeigen:

Figur 1   Eine erfindungsgemäße Mikro-Lamellenelektrodenzelle in perspektivischer und teilweise winklig geschnittener Darstellung;

Figur 2   Eine erfindungsgemäße Mikro-Lamellenelektrodenzelle in zwei zueinander orthogonalen Seitenansichten, jeweils zur Hälfte längs geschnitten;

Figur 3   Beispielhafte Elektrodengrundrisse mit unterschiedlichen Ausführungsformen von Schlitzen darin;

Figur 4   Einen schematischen Längsschnitt durch einen Elektrodenstapel (Ausschnitt), betrachtet in Richtung des Verlaufs der Schlitzöffnungen in den Elektroden, sowie einen beispielhaften Elektrodengrundriss, jeweils mit Bezeichnung der relevanten geometrischen Bezugsgrößen;

Figur 5   Schematische Längsschnitte durch einen Elektrodenstapel (Ausschnitt) mit unterschiedlichen Ausführungsformen von Rahmenelementen;

Figur 6   Beispielhafte vereinfachte Darstellungen von möglichen Einbauvarianten der Mikro-Lamellenelektrodenzelle in eine Anlage zur elektrooxidativen Abwasserbehandlung;

Figur 7   Den gemessenen und berechneten zeitlichen Verlauf des CSB (engl. "COD" für "chemical oxygen demand") in Beispielexperimenten mit einer konventionellen (a) bzw. einer Mikro-Lamellenelektrodenzelle (b).

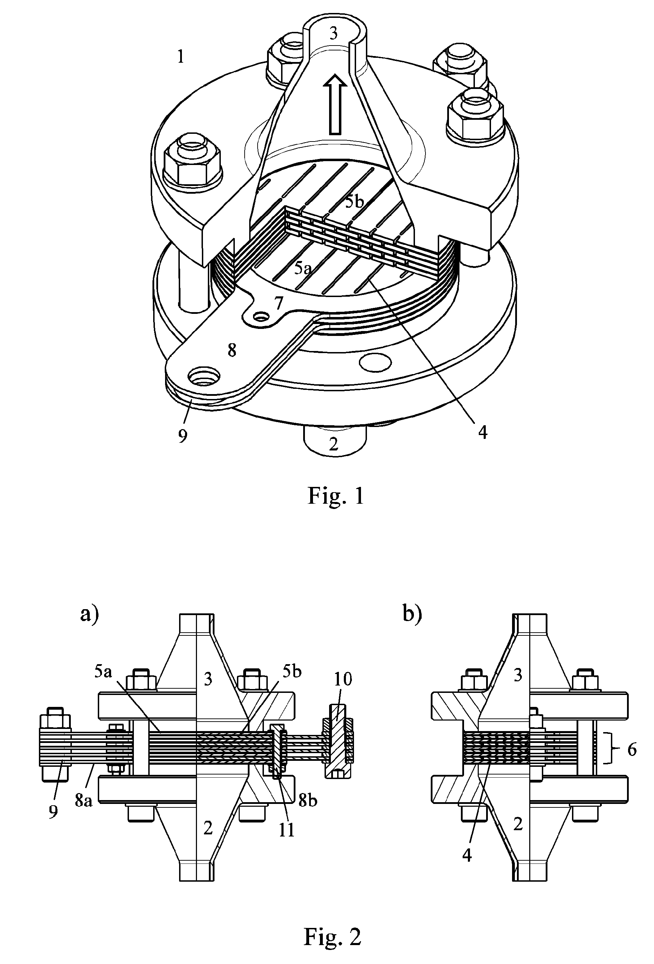

Figur 1) zeigt eine erfindungsgemäße Mikro-Lamellenelektrodenzelle (1) in perspektivischer Darstellung, teilweise geschnitten zur Illustration des inneren Aufbaus: Mehrere Anoden (5a) und Kathoden (5b) sind mit jeweils dazwischen angeordneten Rahmenelementen (7) aus Elastomerfolie zu einem Stapel (6 - vgl. Fig. 2) zusammengesetzt, der zwischen einem Einlass (2) und einem Auslass (3) fluiddicht verspannt ist. Die Elektroden sind mit äquidistant parallel angeordneten Schlitzen versehen, die in benachbarten Ebenen jeweils um ihren halben Mittenabstand zueinander versetzt angeordnet sind, so dass der Elektrolyt beim Passieren des Elektrodenstapels einen mäanderförmigen Pfad mit wiederholter Teilung und Wiedervereinigung an jeder Elektrode durchläuft. Jede der Elektroden ist mit einer Anschlusslasche (8) versehen, welche zungenförmig aus dem ansonsten im Wesentlichen kreisförmigen Grundriss der Elektroden herausragt. Die Anschlusslaschen aller Anoden ragen deckungsgleich an der einen Seite des Stapels heraus, die der Kathoden an der entgegengesetzten. Zwischen benachbarten Anschlusslaschen gleicher Polarität sind Kontaktscheiben eingesetzt, deren Dicke der Dicke jeweils einer Elektrode der entgegengesetzten Polarität zuzüglich der Dicke zweier Rahmenelemente entspricht und somit den Raum zwischen den Kontaktlaschen vollständig ausfüllt. Durch Verspannung der jeweils übereinander angeordneten Kontaktlaschen mittels jeweils eines Kontaktbolzens (10) werden alle Anoden und alle Kathoden jeweils leitend miteinander verbunden und können somit als Bündel parallel an den jeweiligen Pol der Stromquelle angeschlossen werden.

Figur 2) zeigt die in Figur 1 dargestellte Mikro-Lamellenelektrodenzelle in zwei zueinander senkrechten Seitenansichten, jeweils im Halbschnitt durch die Mittelebene (a) bzw. leicht hierzu versetzt (b). Die Ansichtsrichtung verläuft hierbei in a) senkrecht und in b) parallel zu der durch die Achsen der Kontaktbolzen definierten und parallel zu den Schlitzen sowie zur Hauptflussrichtung des Elektrolyten verlaufenden Mittelebene der Zelle.

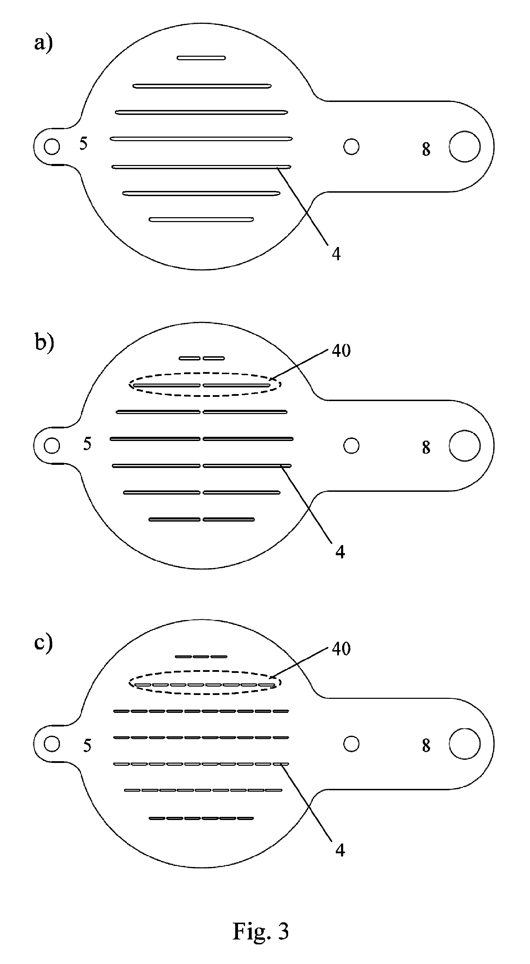

Figur 3) zeigt drei beispielhafte Elektrodengrundrisse mit unterschiedlichen Ausführungsformen der darin eingebrachten Schlitzöffnungen (4). Während sich diese insbesondere bei kleineren, dickeren Elektroden über den gesamten Anströmquerschnitt (i.A. definiert durch die Innenkontur der Rahmenelemente) erstrecken können, wie in Figur 3a) gezeigt, ist es insbesondere bei größeren und/oder dünneren Elektroden mitunter vorteilhaft, die zwischen den Schlitzöffnungen verlaufenden Elektrodenlamellen über gewisse Distanzen hinweg durch Unterbrechungen der Schlitze gegeneinander abzustützen (Figur 3b/c). Auf diese Wiese treten an die Stelle der ursprünglichen Schlitze (4) zueinander parallele Schlitzreihen (40). Beispielswese können die Stützstege zwischen den Lamellen in gemeinsamen Fluchten über die Elektrode verteilt sein, wie in Figur 3b) dargestellt. Alternativ ist z.B. auch eine äquidistante Anordnung gemäß Figur 3c) möglich, was bei einheitlicher Länge der Schlitzreihen (z.B. bei rechteckigem Anströmquerschnitt der Elektrode) auch mit Fall 3b) koinzidieren kann. Es sind ferner unregelmäßige Anordnungen der Stützstege möglich und können je nach Form des Anströmquerschnitts der Elektroden z.B. aus statischen oder hydrodynamischen Gründen auch vorteilhaft sein.

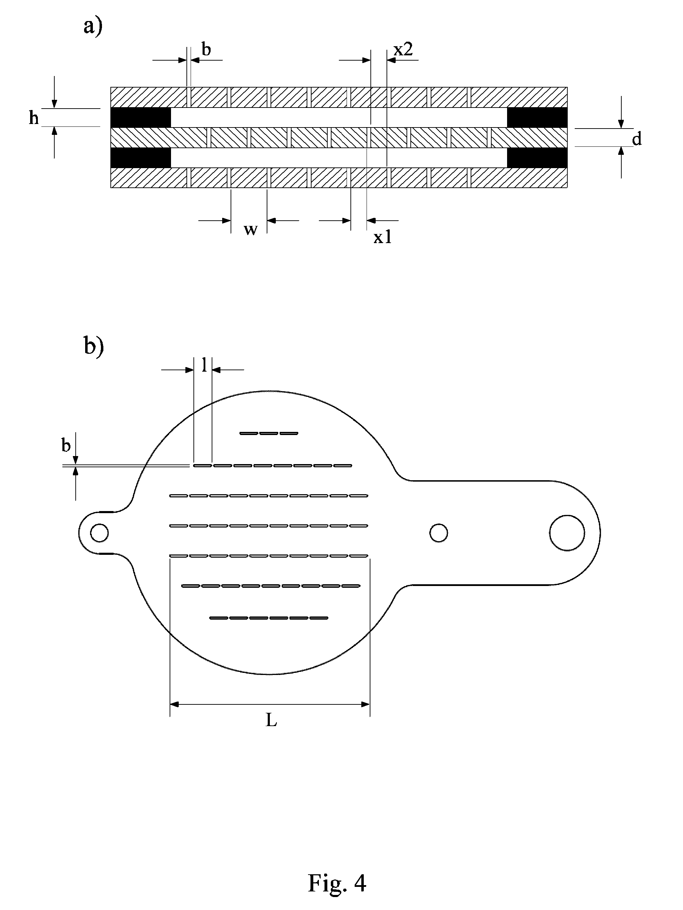

Figur 4) führt die hydrodynamisch relevanten geometrischen Größen des Elektrodenstapels bzw. der Elektroden auf und ordnet sie den jeweiligen geometrischen Elementen zu: Figur 4a) zeigt hierzu in schematisch reduzierter Form den Ausschnitt eines Elektrodenstapels einer Mikro-Lamellenelektrodenzelle im Längsschnitt senkrecht zum Verlauf der Schlitzöffnungen bzw. Schlitzreihen. Bezeichnet sind hier die Elektrodendicke $d$, der lichte Elektrodenabstand $h$, die Schlitzbreite $b$, der lichte Schlitzabstand $w$ sowie die Abstände $x1$ und $x2$ jeweils benachbarter Schlitze in benachbarten Elektroden. In der allgemeinsten Form der erfindungsgemäßen Mikro-Lamellenelektrodenzelle können diese Größen innerhalb jeder Elektrode sowie zwischen den Elektroden untereinander innerhalb der in den Ansprüchen genannten Grenzen variieren, so dass beispielsweise die Abstände eines Schlitzes zu allen seinen (bis zu sechs) Nachbarn in gewissen Grenzen unterschiedlich ausgeführt sind. Figur 4b) illustriert die Definition der Breite $b$ sowie der Länge der Schlitze $l$ bzw. der Schlitzreihen $L$.

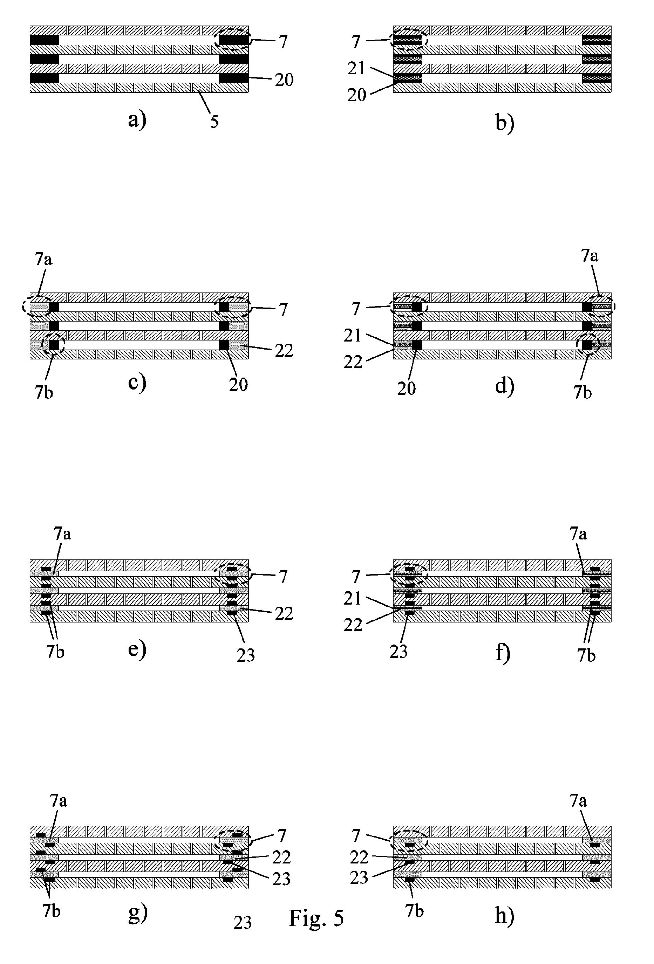

Figur 5) zeigt anhand eines in schematisch reduzierter Form im Längsschnitt dargestellten Ausschnitts eines Elektrodenstapels einer Mikro-Lamellenelektrodenzelle exemplarisch eine Reihe möglicher Ausführungsformen von Rahmenelementen (7). Diese sind im einfachsten Fall (Figur 5a) aus einer planaren Elastomerfolie (20) ausgeschnitten. Zwecks Erhöhung der Druckfestigkeit kann diese Elastomerfolie auch durch einen steifen Kern (21, z.B. Metallfolie, Draht- oder Fasergeflecht) verstärkt sein (Figur 5b). Ebenso der Stabilisierung gegen den Innendruck in der Zelle kann der Aufbau der Rahmenelemente aus einem Dichtelement (7b) aus elastomerem Material (20) und einem außerhalb angeordneten Distanzelement (7a) aus steifem, elektrisch isolierendem Material (22) dienen, welches hiermit eine Stützfunktion für das Dichtelement übernimmt. Das Distanzelement kann hierbei wiederum einteilig aus einheitlichem Material (Figur 5c) oder seinerseits als Verbundelement mit integrierter Verstärkung (21) aufgebaut sein (Figur 5d). Sollen sehr geringe Elektrodenabstände realisiert werden, kann eine räumliche Verlagerung der Dichtfunktion in Nuten in den Elektroden sinnvoll sein, um einen ausreichenden Verpressweg der Dichtelemente bei angemessener (d.h. nicht zu großer) relativer Einfederung/Verpressung zu ermöglichen. Die Figuren 5e) bis 5h) skizzieren hierfür mögliche Aufbauten des Distanzelements (7a), z.T. auch mit Verstärkung (21) sowie unterschiedliche Anordnungen der Dichtelemente (7b, z.B. als O-Ring: 23). Die in Figur 5h) gezeigte Ausführungsform ist dann möglich, wenn ein biegeschlaffes Distanzelement verwendet wird, welches durch das Dichtelement (7b bzw. 23) hinreichend stark gegen die dem Dichtelement jeweils gegenüber liegende Elektrodenoberfläche gepresst wird.

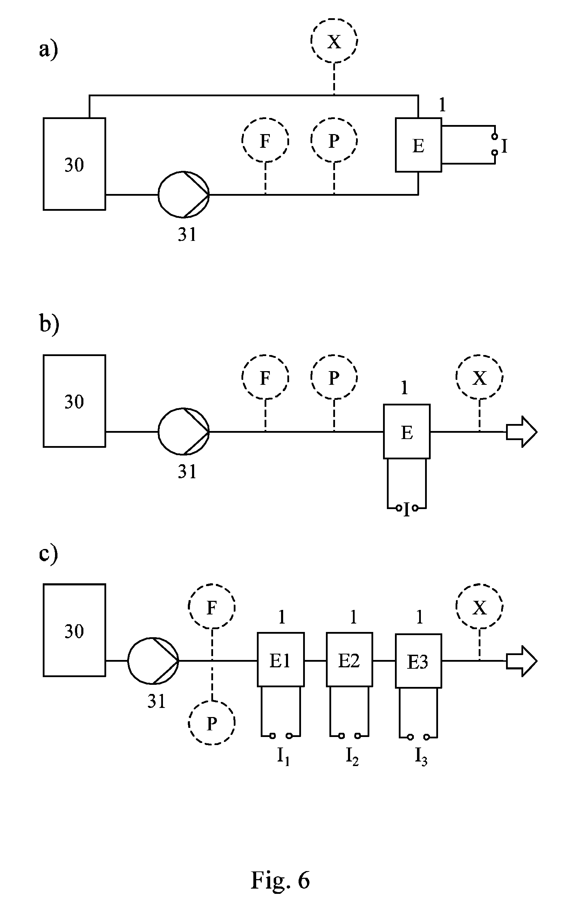

Figur 6) illustriert in beispielhafter und stark vereinfachter Form mögliche Betriebsweisen der erfindungsgemäßen Mikro-Lamellenelektrodenzelle. In den meisten Fällen wird der in Figur 6a) dargestellte Zirkulationsbetrieb sinnvoll sein, bei dem das zu behandelnde Abwasser chargenweise in einem Reservoir (30) vorgelegt und zur Behandlung in wiederholten Zyklen mittels einer Pumpe (31) durch die Zelle (1 bzw. E) gefahren wird. In jedem Durchlauf erfolgt dabei nur ein relativ geringer Abfall des CSB, wodurch die Verunreinigungskonzentration innerhalb der Zelle jeweils weitgehend homogen ist. Der Prozess kann mittels verschiedener Sensoren (z.B. für Druck, Massenstrom, Temperatur, pH-Wert, Leitfähigkeit etc.) bzw. Inline-Analyseverfahren überwacht und ggf. gesteuert/geregelt werden. In gewissen Fällen, insbesondere bei nicht zu hohen Star-CSB-Werten und nicht zu kleinen Ziel-CSB-Werten, ist es möglich und kann es sinnvoll sein, das Abwasser in einem einzigen Durchgang durch die Zelle zu behandeln. Um hierbei die für einen hinreichend guten Stofftransport erforderlichen Mindest-Strömungsgeschwindigkeiten in der Zelle zu erreichen, muss die Zelle hierbei mit einer vergleichsweise großen Zahl von jeweils relativ kleinen Elektroden bestückt werden. Zudem bieten sich hierfür Elektrodengeometrien mit besonders geringen Schlitzquerschnittflächen pro Elektrode und besonders geringen Interelektrodenabständen an. Im Vergleich zum Zirkulationsbetrieb wird hierfür eine Pumpe mit großer Förderhöhe bei vergleichsweise geringem Volumenstrom benötigt. Ggf. kann es ferner vorteilhaft sein, mehrere Mikro-Lamellenelektrodenzellen mit unterschiedlichen Elektrodengeometrien bzw. -bestückungen (mit in Flussrichtung steigendem Druckverlust) und ggf. abgestufter (in Stromrichtung fallender) Stromdichte fluidisch in Reihe zu schalten (Figur 6c).

Figur 7) zeigt den zeitlichen Verlauf des CSB aus den beiden oben beschriebenen Anwendungsbeispielen. In Diagramm 7a) ist die Entwicklung des CSB in einer künstlichen Abwasserprobe (Ausgangsvolumen: 3 L) mit 2 g/L Phenol, 1 g/L NaCl und 40 g/L $NaSO_4$ während der elektrolytischen Behandlung mit einer kommerziell erhältlichen Labor-Elektrolysezelle mit Streckmetall-Elektroden bei 950 L/h Elektrolytdurchsatz und 16 A (entspr. 100 mA/cm$^2$) dargestellt. Die Anpassung einer Modellkurve liefert für diesen Versuch einen Stofftransportkoeffizienten von etwa 4,63*10$^{-5}$ m/s. Im Vergleich hierzu zeigt Diagramm 7b) die Entwicklung des CSB in einer Vergleichsprobe mit derselben Zusammensetzung und Ausgangsmenge, welche bei gleich hohem Umlaufvolumenstrom mit 32 A (entspr. etwa 167 mA/cm$^2$) mit einer Mikro-Lamellenelektrodenzelle behandelt wurde. Hierfür liefert die Auswertung mit dem Prozessmodell einen Stofftransportkoeffizienten vom 1,65*10$^{-4}$ m/s, womit der Abbauprozess trotz höherer Stromdichte über einen größeren CSB-Bereich mit voller Stromeffizienz gefahren werden kann und somit deutlich kürzere Prozesszeiten erreicht werden können. Die Mikro-Lamellenelektrodenzelle hatte in diesem Beispiel denselben Grundriss und Anströmquerschnitt wie die konventionelle Vergleichszelle, bei gleicher Elektrodenanzahl aber geringerer Bauhöhe. Aufgrund der geringeren Porosität der Elektroden ergab sich dabei für die Mikro-Lamellenelektrodenzelle eine größere aktive Fläche pro Elektrode und damit auch eine bessere Flächenausnutzung der Substrate.

**Bezugszeichenliste:**

| 1 | Mikro-Lamellenelektrodenzelle |
|---|---|
| 2 | Einlass |
| 3 | Auslass |
| 4 | Öffnung/Schlitz in Elektrode |
| 5 | Elektrode |
| 5a | Anode |
| 5b | Kathode |
| 6 | Elektrodenstapel |
| 7 | Rahmenelement |
| 7a | Distanzelement |
| 7b | Dichtelement |
| 8 | Kontaktlasche (a: Anode / b: Kathode) |
| 9 | Kontaktscheibe |
| 10 | Kontaktbolzen |
| 11 | Fixierschraube aus elektrisch isolierendem Material |
| 20 | Elastomerfolie/-beschichtung |
| 21 | Verstärkungselement |
| 22 | Isolationsfolie/-beschichtung |
| 23 | O-Ring |
| 30 | Vorlagebehälter (Abwasserreservoir) |
| 31 | Pumpe |
| 40 | Schlitzreihe |

**Patentansprüche**

1.  Elektrolysezelle, umfassend wenigstens einen Einlass und wenigstens einen Auslass für den Elektrolyten, ferner umfassend eine Anzahl von planaren, mit durchströmbaren Öffnungen versehenen Elektroden, von denen wenigstens eine durch funktionelle Beschichtung als Anode mit einem im Vergleich zur Standard-Wasserstoffelektrode erhöhten Überpotenzial für die Bildung von Sauerstoff und wenigstens eine weitere als Gegenelektrode (Kathode) ausgebildet ist, die Elektroden hinsichtlich ihrer Polarität in alternierender oder paarweise alternierender Reihenfolge angeordnet einen Stapel bilden, ferner umfassend eine Anzahl von Rahmenelementen, welche jeweils einzeln zwischen benachbarten Elektroden angeordnet sind, wobei die Rahmenelemente gleichzeitig für eine gegenseitige elektrische Isolierung, eine gegenseitige fluidische Abdichtung sowie für einen definierten gegenseitigen Abstand der jeweils angrenzenden Elektroden sorgen und der so gebildete Elektrodenstapel derart zwischen dem Einlass und dem Auslass eingebaut ist, dass ein zur Umgebung hin fluiddichter, durchströmbarer Elektrolytpfad vom Einlass durch den Elektrodenstapel zum Auslass entsteht, **dadurch gekennzeichnet, dass**

    benachbarte Elektroden einen gegenseitigen lichten Abstand von nicht mehr als 0,5 mm haben,

    die durchströmbaren Öffnungen in den Elektroden als parallel zueinander verlaufende, die Elektroden im Wesentlichen senkrecht zu ihrer Oberfläche durchbrechende Schlitze oder Schlitzreihen ausgebildet sind, wobei die einzelnen Schlitze eine Breite von nicht mehr als 1,5 mm und eine Länge von mindestens der dreifachen Breite vorweisen und in einem zu ihrer maximalen Ausdehnung senkrechten lichten Abstand von wenigstens der zweifachen Schlitzbreite zueinander stehen und

    die Schlitze bzw. Schlitzreihen in benachbarten Elektroden jeweils parallel zueinander verlaufen und senkrecht zu der maximalen Ausdehnung der Schlitze bzw. Schlitzreihen definiert zueinander versetzt angeordnet sind in der Weise, dass der Abstand einer Schlitzreihe in einer Elektrode zu jeder unmittelbar benachbarten Schlitzreihe in den unmittelbar benachbarten Elektroden um nicht mehr als 25% variiert.

2.  Elektrolysezelle nach Anspruch 1 **dadurch gekennzeichnet, dass** die Anoden mit (z.B. durch Dotierung mit Bor) elektrisch leitfähigem Diamant oder diamantartigem Kohlenstoff beschichtet sind.

3.  Elektrolysezelle nach Anspruch 1 oder 2 **dadurch gekennzeichnet, dass** die Anoden ein Basismaterial umfassen, wobei das Basismaterial ein Metall ist.

**4.** Elektrolysezelle nach Anspruch 3, **dadurch gekennzeichnet, dass** das Metall ausgewählt ist aus der Gruppe bestehend aus Niob, Wolfram, Tantal, Titan, dotiertes Silizium oder Legierungen aus diesen Metallen.

**5.** Elektrolysezelle nach einem der Ansprüche 1 bis 4 **dadurch gekennzeichnet, dass** die Kathoden aus einem Material gefertigt sind, welches ausgewählt ist aus der Gruppe bestehend aus Edelstählen, Nickelbasislegierungen, Kupfer(-legierungen) und Aluminium(-legierungen).

**6.** Elektrolysezelle nach einem der Ansprüche 1 bis 5 **dadurch gekennzeichnet, dass** die Breite der Schlitze kleiner als die halbe Dicke der Elektroden ist.

**7.** Elektrolysezelle nach einem der Ansprüche 1 bis 6 **dadurch gekennzeichnet, dass** die Breite der Schlitze Werte von 0,2 mm bis 0,8 mm annimmt.

**8.** Elektrolysezelle nach einem der Ansprüche 1 bis 7 **dadurch gekennzeichnet, dass** der Abstand der Schlitze bzw. Schlitzreihen innerhalb jeder Elektrode sowie in allen Elektroden innerhalb der Zelle um nicht mehr als $\pm 10\%$ variiert und Werte zwischen 2 mm und 10 mm annimmt.

**9.** Elektrolysezelle nach einem der Ansprüche 1 bis 8 **dadurch gekennzeichnet, dass** der gegenseitige lichte Abstand benachbarter Elektroden Werte von 0,2 mm bis 0,4 mm annimmt.

**10.** Elektrolysezelle nach einem der Ansprüche 1 bis 9 **dadurch gekennzeichnet, dass** die Elektroden eine Dicke im Bereich von 0,2 mm bis 1,5 mm haben.

**11.** Elektrolysezelle nach einem der Ansprüche 1 bis 10 **dadurch gekennzeichnet, dass** die zwischen den Elektroden angeordneten Rahmenelemente entweder als flachdichtende Elastomerfolie ausgeführt sind, deren Dicke den gegenseitigen Abstand der Elektroden definiert und die gleichzeitig die Fluiddichtigkeit zwischen benachbarten Elektroden herbeiführt, oder aus einem nicht-elastomeren Rahmen bestehen, dessen Dicke den gegenseitigen Abstand der Elektroden definiert, sowie aus jeweils einem oder zwei elastomeren Dichtelementen, welche für die Abdichtung zwischen den Elektroden bzw. zwischen Elektroden und Rahmen sorgen.

**12.** Elektrolysezelle nach einem der Ansprüche 1 bis 11 **dadurch gekennzeichnet, dass** die Elektroden an ihrem äußeren Umfang mit Kontaktlaschen versehen sind, über welche eine Stromzu- bzw. abführung ohne Kontakt der Zuleitungen und Verbindungelemente mit dem Elektrolyten erfolgen kann.

**13.** Verfahren zur Herstellung einer Elektrolysezelle nach einem der Ansprüche 1 bis 12 **dadurch gekennzeichnet, dass** die Elektroden aus einer planaren Ausgangsform (z.B. Folie oder Blech) mit einer Dicke von maximal 2 mm durch vorwiegend laterale Strukturierung gefertigt werden.

**14.** Verfahren zum Betrieb einer Elektrolysezelle nach einem der Ansprüche 1 bis 12 **dadurch gekennzeichnet, dass** diese in eine Apparatur eingebaut ist, die eine Durchströmung der Zelle ermöglicht derart, dass innerhalb der Schlitze in den Elektroden Leerrohrgeschwindigkeiten im Bereich von 0,3 m/s bis zu 3 m/s erreicht werden.

**15.** Anwendung der Elektrolysezelle nach einem der Ansprüche 1 bis 13 für den elektro-oxidativen Abbau von Verunreinigungen in Abwässern.

**16.** Anwendung der Elektrolysezelle nach einem der Ansprüche 1 bis 13 für die elektrolytische Synthese von Chemikalien, insbesondere Oxidationsmitteln.

Fig. 1

a)                    b)

Fig. 2

Fig. 3

a)

b)

Fig. 4

Fig. 5

a)

b)

c)

Fig. 6

Fig. 7

Europäisches
Patentamt

European
Patent Office

Office européen
des brevets

**EUROPÄISCHER RECHERCHENBERICHT**

Nummer der Anmeldung

EP 13 15 6886

| | **EINSCHLÄGIGE DOKUMENTE** | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| A | DE 20 2005 003720 U1 (CONDIAS GMBH [DE]) 13. Juli 2006 (2006-07-13) * das ganze Dokument * ----- | 1-16 | INV. C02F1/461 ADD. C02F1/467 |
| A | EP 0 045 148 A1 (ICI PLC [GB]) 3. Februar 1982 (1982-02-03) * das ganze Dokument * ----- | 1-16 | |
| A | WO 01/15792 A1 (CORNING INC [US]) 8. März 2001 (2001-03-08) * das ganze Dokument * ----- | 1-16 | |
| A | WO 2004/013379 A1 (BAYER MATERIALSCIENCE AG [DE]; GESTERMANN FRITZ [DE]; BULAN ANDREAS [D] 12. Februar 2004 (2004-02-12) * das ganze Dokument * ----- | 1-16 | |
| A | US 2012/037497 A1 (PANCURAK FRANTISEK [SK] ET AL) 16. Februar 2012 (2012-02-16) * das ganze Dokument * ----- | 1-16 | **RECHERCHIERTE SACHGEBIETE (IPC)** C02F |

Der vorliegende Recherchenbericht wurde für alle Patentansprüche erstellt

| Recherchenort | Abschlußdatum der Recherche | Prüfer |
|---|---|---|
| Den Haag | 5. Juli 2013 | Liebig, Thomas |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**            EP 13 15 6886

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-07-2013

| Im Recherchenbericht angeführtes Patentdokument | Datum der Veröffentlichung | Mitglied(er) der Patentfamilie | Datum der Veröffentlichung |
|---|---|---|---|
| DE 202005003720 U1 | 13-07-2006 | CA 2599846 A1 | 08-09-2006 |
| | | DE 202005003720 U1 | 13-07-2006 |
| | | US 2008156642 A1 | 03-07-2008 |
| | | WO 2006092125 A1 | 08-09-2006 |
| EP 0045148 A1 | 03-02-1982 | AU 538823 B2 | 30-08-1984 |
| | | AU 7312781 A | 04-02-1982 |
| | | CA 1189022 A1 | 18-06-1985 |
| | | DD 201628 A5 | 27-07-1983 |
| | | DE 3170397 D1 | 13-06-1985 |
| | | EP 0045148 A1 | 03-02-1982 |
| | | ES 8204479 A1 | 01-08-1982 |
| | | FI 812342 A | 31-01-1982 |
| | | IE 52091 B1 | 10-06-1987 |
| | | IL 63420 A | 30-03-1984 |
| | | IN 157163 A1 | 01-02-1986 |
| | | MY 8600486 A | 31-12-1986 |
| | | NO 812592 A | 01-02-1982 |
| | | NZ 197740 A | 09-11-1984 |
| | | PL 232403 A1 | 15-02-1982 |
| | | PT 73447 A | 01-08-1981 |
| | | US 4464243 A | 07-08-1984 |
| WO 0115792 A1 | 08-03-2001 | CN 1371299 A | 25-09-2002 |
| | | EP 1210162 A1 | 05-06-2002 |
| | | JP 2003508192 A | 04-03-2003 |
| | | TW 514623 B | 21-12-2002 |
| | | US 6214204 B1 | 10-04-2001 |
| | | WO 0115792 A1 | 08-03-2001 |
| WO 2004013379 A1 | 12-02-2004 | AU 2003250100 A1 | 23-02-2004 |
| | | BR 0305706 A | 19-10-2004 |
| | | CN 1671889 A | 21-09-2005 |
| | | DE 10234806 A1 | 19-02-2004 |
| | | EP 1527211 A1 | 04-05-2005 |
| | | JP 2005534806 A | 17-11-2005 |
| | | KR 20050028050 A | 21-03-2005 |
| | | US 2004069621 A1 | 15-04-2004 |
| | | WO 2004013379 A1 | 12-02-2004 |
| US 2012037497 A1 | 16-02-2012 | US 2012037497 A1 | 16-02-2012 |
| | | US 2012037498 A1 | 16-02-2012 |
| | | US 2013026031 A1 | 31-01-2013 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4426901 A1
- EP 0659691 B1
- DE 19708296 A1
- DE 3705956 C2
- DE 4330518 A1
- DE 102005006214 A1
- US 7232507 B2
- DE 3519573 A1
- DE 2538000 A1

- DE 10025167 A1
- JP 3266617 B
- WO 2008056336 A1
- WO 2012004769 A1
- KR 102012002189 A1
- DE 60306172 T2
- JP 2011246799 B
- KR 101080227 B1


**In der Beschreibung aufgeführte Nicht-Patentliteratur**

- **M. PANIZZA ; G. CERISOLA.** Application of diamond electrodes to electrochemical processes. *Electrochimica Acta,* 2005, vol. 51, 191-199

- Modeling of Electrochemical Process for the Treatment of Wastewater Containing Organic Pollutants. **M.A. RODRIGO et al.** Electrochemistry for the Environment. Springer LLC, 2010